# EUROPÄISCHE PATENTSCHRIFT

(11) **EP 0 408 967 B1**
(45) Veröffentlichungstag und Bekanntmachung des Hinweises auf die Patenterteilung: **16.03.1994**
(21) Anmeldenummer: 90112592.2
(22) Anmeldetag: 02.07.1990
(51) Int. Cl.: H02G 15/013, H02G 15/192

(54) **Dichtungskörper für längsgeteilte Kabelgarnituren**
Sealing body for longitudinally split cable fittings
Corps d'étanchéité pour garnitures de câbles divisées longitudinalement

(30) Priorität: 18.07.1989 DE 3923762
(43) Veröffentlichungstag der Anmeldung: 23.01.1991
(73) Patentinhaber: SIEMENS AKTIENGESELLSCHAFT, 80333 München (DE)
(72) Erfinder: Bachel, Ernst, D-8085 Geltendorf (DE); Licker, Anton, D-8000 München 83 (DE)

(56) Entgegenhaltungen:
- EP-A- 0 002 789
- EP-A- 0 219 072
- DE-A- 3 036 022
- US-A- 4 103 911

## Beschreibung

Die Erfindung betrifft einen Dichtungskörper für längsgeteilte Kabelgarnituren aus thermoplastischem Kunststoff mit bei Bedarf einschneidbaren, anpaßbaren Kabeleinführungsöffnungen in der Trennebene des Dichtungskörpers und mit einer integrierten Abfangvorrichtung für die eingeführten Kabel.

Derartige Dichtungskörper für längsgeteilte Kabelgarnituren sind bereits aus der europäischen Patentanmeldung EP - 0 219 072 bekannt. Dort werden Dichtungskörper verwendet, die in Einführungsrichtung in zwei gleiche Hälften geteilt sind. In dieser Trennungsebene werden die Einführungen und Abdichtungen der Kabel vorgenommen, wobei zusätzlich eine Abfangvorrichtung angeordnet ist. Diese Abfangvorrichtung besteht im wesentlichen aus zwei gegeneinander verschiebbaren Druckplatten, die ebenfalls den Einführungsöffnungen des Dichtungskörpers entsprechende Einführungsöffnungen aufweisen. Die Druckplatten sind jedoch beim Einschneiden der gemeinsamen Einführungsöffnungen in geringem Abstande voneinander angeordnet. Wenn nun diese Druckplatten gegeneinander bewegt werden, verengt sich die nicht völlig geschlossene Kreisform der Einführungsöffnungen in eine Art Mandelform und der lichte Durchmesser wird dadurch verengt. Auf diese Weise wird das eingeführte Kabel eingequetscht und damit zugfest gehalten. Eine derartige Abfangvorrichtung läßt sich jedoch nur bei Dichtungskörperhälften anwenden. Wenn aber eine größere Anzahl von Kabeleinführungen benötigt wird, müssen mehrere Trennebenen vorgesehen werden und damit ergeben sich auch mehrere Dichtungskörpersegmente. Nach der bisherigen Technik ist jedoch eine Kabelabfangung nicht mehr möglich, da bei den mittleren Dichtungskörpersegmenten kein äußerer Eingriff auf die Druckplatten vorhanden ist.

Aufgabe der Erfindung ist nun, Dichtungskörper mit mehreren Einführungsebenen zu schaffen, bei denen eine Kabelabfangvorrichtung in allen Trennebenen wirksam eingesetzt werden kann. Die gestellte Aufgabe wird mit Hilfe eines Dichtungskörpers der eingangs erläuterten Art dadurch gelöst, daß der Dichtungskörper in Querrichtung in mehr als zwei Dichtungskörpersegmente geteilt ist, daß die Kabeleinführungsöffnungen in jeder Trennebene einschneidbar sind, daß versteifende Verbindungselemente über die Trennebenen des Dichtungskörpers hinwegreichend angeordnet sind, daß in jeder Trennebene eine Abfangvorrichtung, bestehend aus jeweils zwei zusammenwirkenden in Kammern der jeweiligen Dichtungskörpersegmente geführten Druckplatten mit korrespondierend eingebrachten Einführungsöffnungen, angeordnet ist, daß äußere, nach einwärts wirkende Druckmittel für die jeweils außen liegenden Druckplatten an den Verbindungselementen angeordnet sind und daß innere, nach auswärts wirkende Druckmittel für die in den jeweiligen Mittelsegmenten des Dichtungskörpers geführten inneren Druckplatten angeordnet sind.

Die Ausführungsformen gemäß der Erfindung haben nun gegenüber dem bisherigen Stand mehrere Vorteile zu verzeichnen. So können durch die übereinander liegenden Trennebenen mehrere Kabel eingeführt werden als es bisher möglich war, da sich insgesamt eine größere für Kabeleinführungen zur Verfügung stehende Dichtungslänge ergibt. Durch die Mehrfachteilung des Dichtungskörpers ergeben sich jedoch bezüglich der Stabilität erhebliche Schwierigkeiten, die bei den Ausführungsformen gemäß der Erfindung dadurch überwunden werden, daß versteifende Verbindungselemente eingesetzt werden, die über alle Trennebenen hinwegreichen, so daß ein Auskippen einzelner Segmente nicht möglich ist. Durch die Ausbildungen der Erfindung bezüglich der Kabelabfangungen im Eingangsbereich ist ebenfalls gemäß der Erfindung eine Möglichkeit gefunden, durch die es ermöglicht wird, daß die eingeführten Kabel auch von den Mittelsegmenten her verklemmt werden können.

Die Erfindung wird nun anhand von elf Figuren näher erläutert.
- Figur 1:: Kabelmuffe mit einem Dichtungskörper gemäß der Erfindung.
- Figur 2:: Dichtungskörper im geöffneten Zustand.
- Figur 3:: Dichtungskörper im Querschnitt.
- Figur 4:: Schema der Kabelabfangung gemäß der Erfindung im Lieferzustand.
- Figur 5:: Schema der Kabelabfangung gemäß der Erfindung im Funktionszustand.
- Figur 6:: Eine Ausführungsform der Kabelabfangung mit zwei Keilen entlang einer Führung für die Druckerzeugung.
- Figur 7:: Ausführungsform eines Keiles.
- Figur 8:: Ausführungsform einer Führungsrippe für die Keile.
- Figur 9:: Querschnitt durch ein Mittelsegment.
- Figur 10:: Querschnitt durch eine Dichtungskammer eines Mittelsegmentes.
- Figur 11:: Querschnitt durch die Keilkammer eines Mittelsegments.

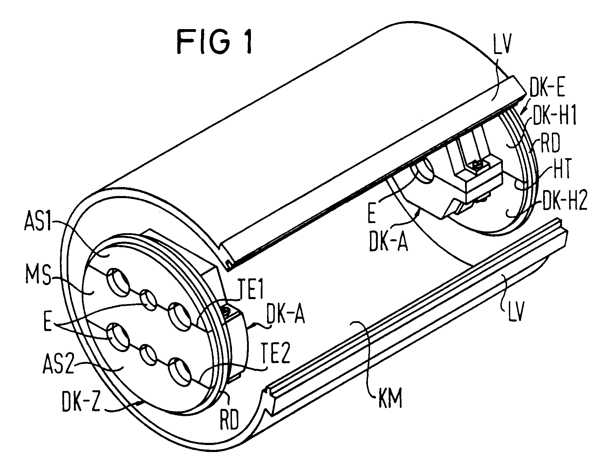

Die Figur 1 zeigt eine Möglichkeit für den Aufbau einer längsgeteilten Kabelmuffe KM mit zum Beispiel einem Dichtungskörper DK-Z gemäß der Erfindung. Als Beispiel ist aufgezeigt, daß das zweite stirnseitige Ende der Kabelmuffe KM mit einem Dichtungskörper DK-E nach der Art des Standes der Technik versehen ist. Dieser besitzt eine Teilungsebene HT und ist dadurch in zwei Dichtungskörperhälften DK-H1 und DK-H2 geteilt. Der Dichtungskörper DK-Z gemäß der Erfindung besitzt hingegen zwei Trennebenen TE1 und TE2, so daß drei Dichtungskörpersegmente AS1, AS2 und MS gegeben sind. In diesen beiden Trennebenen TE1 und TE2 können nun wie angezeigt ist, wesentlich mehr Einführungsöffnungen E untergebracht werden als in der gegenüberliegenden einzigen Trennebene HT des zweiten Dichtungskörpers DK-E. In den Dichtungskörperansätzen DK-A sind die nötigen Dichtungskammern und Keilkammern untergebracht, wie anschließend noch erläutert wird. So werden nun je nach Bedarf die Einführungsöffnungen E eingeschnitten, in welche dann die Kabel eingeführt und in an sich bekannter Weise mit einer Einlage aus plastischem Dichtungsmaterial abgedichtet werden. Nach der Verklemmung der einzelnen Dichtungskörpersegmente wird die Runddichtung RD auf die fertig montierten Dichtungskörper DK-E und DK-Z eingesetzt. Anschließend wird das Muffenrohr mit seinem Längsverschluß LV in an sich bekannter Weise aufgezogen, wobei vorzugsweise ein Verschluß mit keilförmigen Wulsten und einer entsprechend angepaßten Keilschiene verwendet wird. Durch die Anordnung von Kabeln in verschiedenen Trennebenen des Dichtungskörpers DK-Z können zum Beispiel auch nachträglich zusätzliche Kabel eingeführt werden, ohne daß die bereits bestückte Trennebene Schaden leidet, da diese nicht geöffnet werden muß.

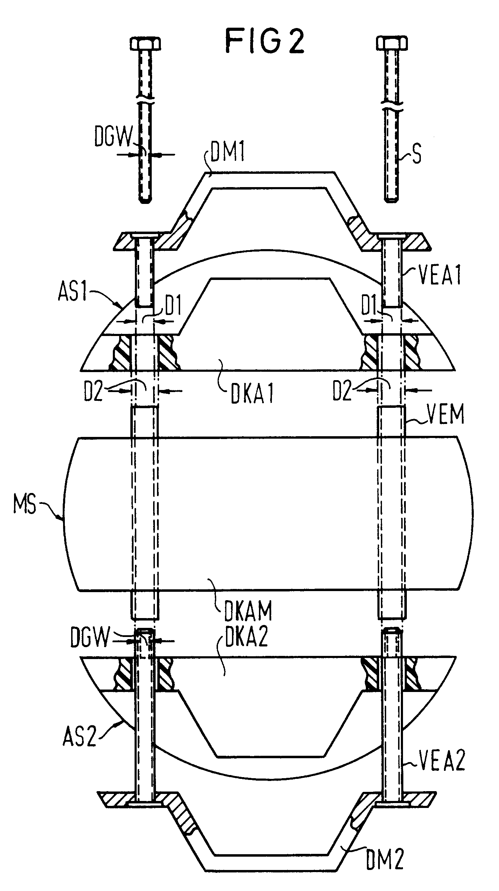

Die Figur 2 zeigt nun, wie die Schwierigkeiten über einer Mehrteilung, insbesondere hier bei einer Zweiteilung eines Dichtungskörpers DK-Z bezüglich der Festigkeit, insbesondere des Auskippens der doch relativ schmalen Dichtungskörpersegmente, bewaltigt werden. Gemäß der Erfindung werden hier versteifende Verbindungselemente VEA1, VEA2 und EM verwendet, die ineinandergreifen und die somit über die Trennebenen hinwegreichen. Diese Verbindungselemente sind in Bohrungen der einzelnen Dichtungskörpersegmente eng bzw. sogar passend geführt, so daß sich entsprechend der Abbildung eine zweifache, durchgehende Versteifung im Dichtungskörper ergibt. So werden beispielsweise in den Außensegmenten AS1 und AS2 Bohrungen eingebracht, in welche die Verbindungselemente VEA1 bzw. VEA2 mit Überstand eingesetzt werden. In deren äußeren Enden können zweckmäßigerweise jeweils die Druckmittel in Form von Druckbügeln DM1 bzw. DM2 fest angeordnet werden, so daß sich für jedes Außensegment ein kombiniertes Bauteil ergibt. Die Verbindungselemente VEA1 bzw. VEA2 greifen nun beim Zusammensetzen der Dichtungskörpersegmente AS1, AS2 und MS in ebenfalls überstehende Verbindungselemente VEM des Mittelsegmentes MS ein, wobei die Bohrungen in den Außensegmenten einen den Verbindungselementen VEM entsprechenden Durchmesser D2 aufweisen, so daß die überstehenden Enden des Mittelsegmentes darin passend eingeführt werden können. Die Innendurchmesser der Verbindungselemente VEM sind auf die Außendurchmesser der Verbindungselemente VEA1 und VEA2 der Außensegmente AS1 und AS2 abgestimmt, so daß sich eine möglichst spielfreie Führung ergibt. Auf diese Weise ergibt sich schließlich die gegenseitige Versteifung über die Trennebenen TE1 und TE2 hinweg. Letztlich greifen dann überstehende Schrauben S jeweils im Innengewinde DGW der gegenüberliegenden, inneren Enden der Verbindungselemente VEA2 ein. Auf diese Weise ist erreicht, daß bei der Vormontage die einzelnen Dichtungskörpersegmente in relativ großem Abstand voneinander bereits fixiert werden können, so daß bei der Montage der Kabel zunächst genügend Freiraum gegeben ist. Durch die Anordnung der Innengewinde an den inneren Enden der Verbindungselemente VEA2 wird dann zusätzlich erreicht, daß die für die Vormontage benötigten Überlängen der Schrauben S im Endzustand noch innerhalb der Verbindungselemente liegt, so daß sich keine störenden Überstände ergeben.

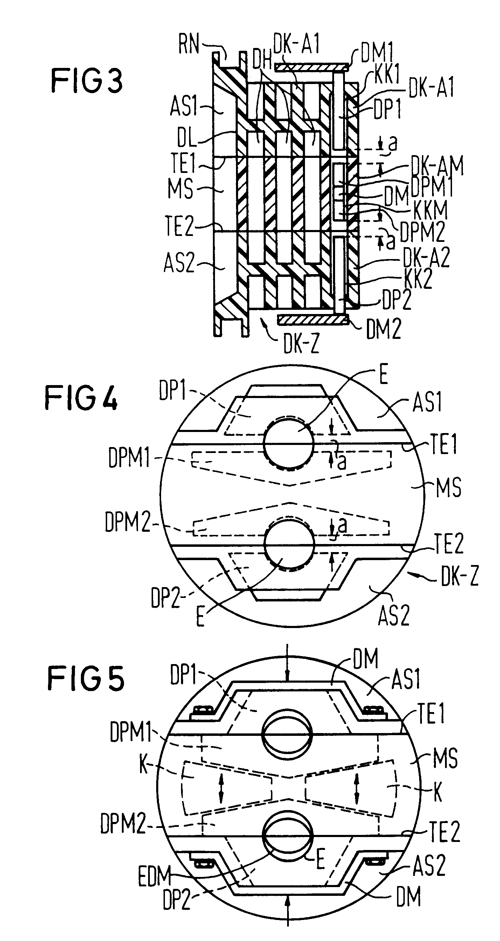

Die Figur 3 zeigt einen Schnitt durch einen Dichtungskörper DK-Z mit zwei Trennebenen TE1 und TE2 gemäß der Erfindung. Man erkennt am einen Ende die umlaufende Ringnut RN, in welche Dichtungsmaterial zur Abdichtung gegen das Muffenrohr eingelegt wird. Im Ansatz dieser Ringnut RN ist die Dichtungsanordnung, bestehend aus einzelnen hintereinander liegenden Dichtungslippen DL mit dazwischen gelagerten Dichtungshohlräumen DH, angeordnet, mit deren Hilfe in an sich bekannter Weise eine Abdichtung gegen die eingeführten Kabel erreicht wird. Zusätzlich sind in den drei Ansatzteilen DK-A1, DK-A2 und DK-AM jeweils noch eine sogenannte Keilkammer KK1, KK2 und KKM parallel verlaufend zu den Dichtungshohlräumen DH angeordnet. In diesen Keilkammern werden die Druckplatten DP1, DP2, DPM1 und DPM2 eingeführt, die zusammen mit den Druckmitteln DM1, DM2 und DM der Abfangvorrichtung für die eingeführten Kabel bilden. Im Zustand der Vormontage sind diese Druckplatten jeweils im geeigneten Abstand a voneinander beidseitig der Trennebenen TE1 bzw. TE2 angeordnet. In diesem Zustand werden auch die Einführungsöffnungen E durch den Dichtungskörper geschnitten. Die äußeren Druckmittel DM1 und Dm2 sind insbesondere als Druckbügel und das innere Druckmittel DM im Mittelsegment MS als Keil ausgebildet.

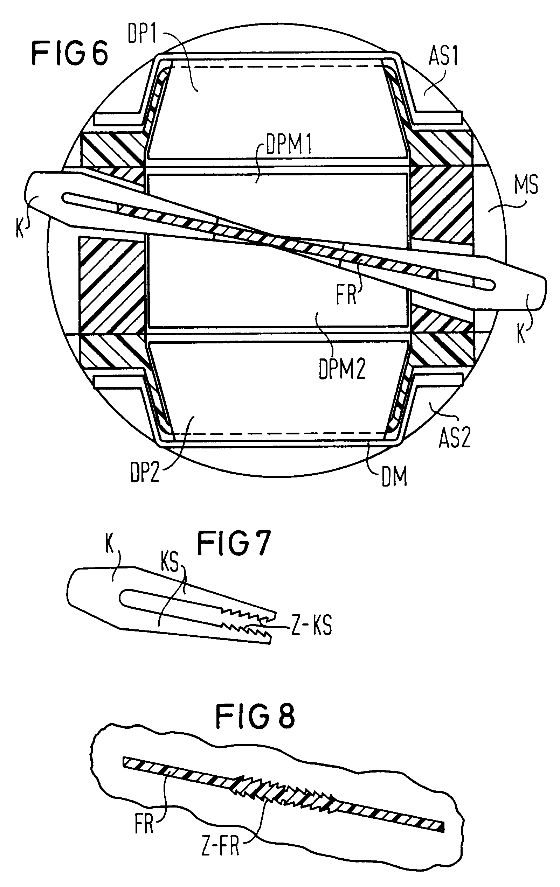

Die Figur 4 zeigt nun den Vormontagezustand, wie er in Figur 3 bereits im Schnitt zu sehen ist. Diese Darstellung ist der Übersichtlichkeit wegen nur als Skizze ausgeführt und deutet eine Ansicht der Ansatzseite des Dichtungskörpers DK-Z an, wobei die Druckplatten DP1 und DP2 in den Außensegmenten AS1 und AS2 sowie die Druckplatten DPM1 und DPM2 im Mittelsegment MS in punktierter Weise in der Position der Vormontage skizziert sind. Man erkennt dabei, daß für jede Trennebene TE1 bzw. TE2 jeweils ein Druckplattenpaar DP1 und DPM1 bzw. DP2 und DPM2 vorgesehen ist. Die beiden äußeren Druckplatten DP1 und DP2 können mit Hilfe von äußeren Druckmitteln in an sich bekannter Weise mit Druckbügeln in ihrer Keilkammer gegen die entsprechende Trennebene gepreßt werden. Doch fehlt zunächst das Gegenlager, um das in die Einführungsöffnung E eingeführte Kabel rundum fassen und fixieren zu können. Gemäß der Erfindung werden nun im Mittelsegment MS die dort angedeuteten inneren Druckplatten DPM1 und DPM2 nach außen gedrückt und zwar vor zugsweise mit Hilfe von Keilen, wie in Figur 5 verdeutlicht wird. In dieser Figur 4 ist noch ersichtlich, daß die sich gegenüberliegenden Druckplatten im Abstand a voneinander angeordnet sind. Die Größe des Abstandes richtet sich nach der Art und dem Zustand des einzuführenden Kabels. Er soll so gewählt sein, daß das Kabel nach dem Einpressen rutschfest gehalten ist. Dabei wird das Kabel bis zu einer von der Kabelkonstruktion abhängigen Tiefe rundum eingeschnürt. Das Einschneiden der Einführungsöffnungen E der Druckplatten erfolgt in dieser gezeigten Einstellung, so daß die kreisförmige Ausschnittshöhe bei den Druckplatten jeweils geringer ist als bei den Dichtungslippen des Dichtungskörpers.

Die Figur 5 zeigt nun deutlich, wie sich diese verschiedenen Ausschnittshöhen der Dichtungslippen und der Druckplatten bei der anschließenden Fixierung der Abfangvorrichtung auswirken. Durch das Anpressen der äußeren Druckplatten DP1 und DP2 innerhalb der Keilkammern der beiden Außensegmente AS1 und AS2 mit Hilfe der beiden Druckmittel DM in Richtung der Pfeile werden die Druckplatten gegen die Trennebenen TE1 und TE2 eingeschoben und der vorherige Abstand a verringert sich. Die beiden innen liegenden Druckplatten DPM1 und DPM2 in der Keilkammer des Mittelsegmentes MS sind auf den sich gegenüberliegenden Seiten gegenläufig abgeschrägt, so daß wie sich bereits aus Figur 4 absehen läßt, beidseitig von der Mittellinie nach außen sich keilförmig erweiternde Aussparungen ergeben. In diese keilförmigen Aussparungen werden nun von außen her Keile K eingetrieben, die bewirken, daß die beiden Druckplatten DPM1 und DPM2 nach auswärts in Richtung der Trennebenen TE1 bzw. TE2 gedrückt werden, wie die Doppelpfeile andeuten. Dadurch werden nun die eingeführten Kabel auch von der inneren Seite her eingeschnürt und es ergeben sich dabei mandelförmige Umfassungen der Kabel, wie es aus der Figur zu ersehen ist. Diese Verformung ergibt sich, da die an sich kreisförmigen Einführungsöffnungen in die im Abstand a voneinander angeordneten Druckplatten eingeschnitten werden. Beim Gegeneinanderverschieben kommt somit keine vollständige Kreisform mehr zustande. Dieses Prinzip kann jedoch auch durch andere Druckmechanismen umgesetzt werden, dabei ist immer zu beachten, daß jeweils zwei Druckplatten gegeneinander verschiebbar sind.

Die Figur 6 zeigt nun eines der vielfältigen Ausführungsbeispiele gemäß der Erfindung. Die Figur 6 läßt durch einen Schnitt in der Keilkammer des Dichtungskörperansatzes erkennen, daß jede der inneren Druckplatten DPM1 und DPM2 im Zentrum des Mittelsegmentes MS nach beidne Seiten hin gegenläufig abgeschrägt sind und daß zwischen ihnen eine Führungsrippe FR angeordnet ist. Diese Führungsrippe FR teilt dabei die beiden keilförmigen Freiräume zwischen den beiden inneren Druckplatten DPM1 und DPM2. Die Freiräume sind jedoch außerdem so angelegt, daß darin angepaßte Keile von außen her eingepreßt werden können. In diesem speziellen Ausführungsbeispiel werden Doppelkeile K verwendet, die U-förmig gestaltet sind. Die Abstimmung zwischen dem Doppelkeil K und der Führungsrippe FR erfolgt so, daß die Führungsrippe FR zwischen den beiden Schenkein des Keiles K geführt wird. Dadurch ergibt sich eine gleichmäßige Austreibung der inneren Druckplatten DPM1 und DPM2 nach auswärts. Bei diesem Ausführungsbeispiel werden außerdem zwei derartige Keile verwendet, die gegenüberliegend eingetrieben werden. Die äußeren Druckplatten DP1 und DP2 werden in an sich bekannter Weise mit Hilfe der Druckmittel DM eingepreßt.

Die Figur 7 zeigt einen U-förmigen Doppelkeil K, der an der Innenseite seiner Schenkel KS zumindest teilweise mit einseitig schräg verlaufenden Zähnen Z-KS versehen ist. Diese Zähne Z-KS dienen im Zusammenspiel mit gegenläufig angeordneten Zähnen entlang der Führungsrippe FR, wie sie in Figur 8 gezeigt wird, als Rastelemente, wodurch vermieden wird, daß sich der Keil K nach dem Einschieben selbsttätig wieder lösen kann.

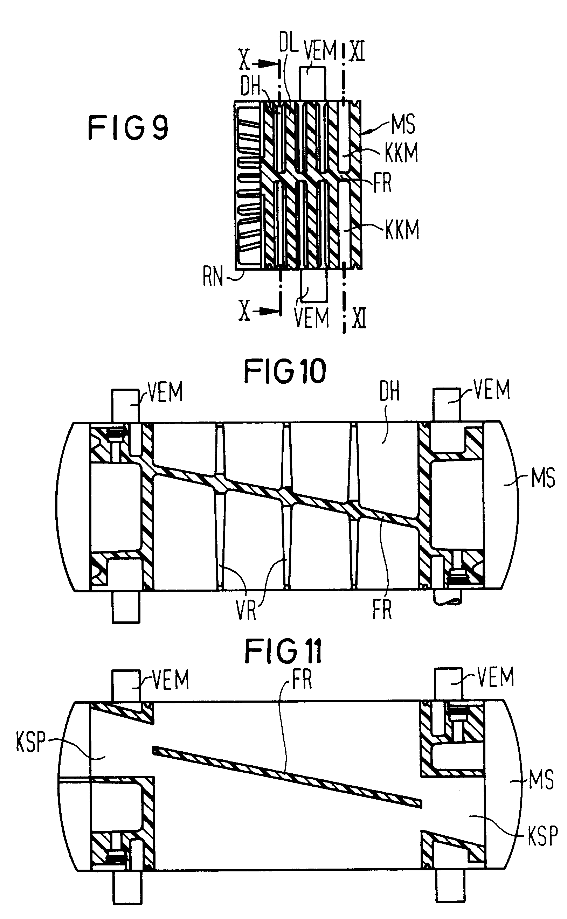

In Figur 9 wird ein konstruktiv ausgeführtes Mittelsegment MS eines Dichtungskörpers gezeigt. An dem einen Ende sind Versteifungen für die Ringnut RN und etwa in der Mitte die überstehenden versteifenden Verbindungselemente VEM erkennbar. Weiterhin sind im Schnittbildteil die hintereinander liegenden Dichtungshohlräume DH und die Dichtungslippen DL zu sehen, wobei der letzte Hohlraum als Führungskammer KKM für die Keile verwendet wird. Quer verlaufend ist die Führungsrippe FR dargestellt. Die Schnittlinien X-X und XI-XI deuten die Schnittlage für die Figuren 10 und 11 an.

Die Figur 10 zeigt, daß im Inneren der Dichtungshohlräume DH senkrecht verlaufend Versteifungsrippen VR angeordnet sind und daß die Führungsrippe FR durch den gesamten Dichtungskörper hindurchgeführt ist. Auch dies dient hier zur Versteifung des Dichtungskörpers.

Die Figur 11 zeigt schließlich den Schnitt durch die Keilkammer KKM des Mittelsegmentes MS, so daß der Verlauf der Führungsrippe FR deutlich wird. Seitlich sind Spalte KSP angeordnet, durch die die Keile eingeführt und auf die Führungsrippe FR gebracht werden können.

## Patentansprüche

1. Dichtungskörper für längsgeteilte Kabelgarnituren aus thermoplastischem Kunststoff mit bei Bedarf einschneidbaren, anpaßbaren Kabeleinführungsöffnungen (E) in der Trennungsebene des Dichtungskörpers (DK-Z) und mit einer integrierten Abfangvorrichtung für die eingeführten Kabel, **dadurch gekennzeichnet,** daß der Dichtungskörper (DK-Z) in Querrichtung in mehr als zwei Dichtungskörpersegmente (AS1, AS2, MS) geteilt ist, daß die Kabeleinführungsöffnungen (E) in jeder Trennebene (TE1, TE2) einschneidbar sind, daß versteifende Verbindungselemente (VEA1, VEA2, VEM) über die Trennebenen (TE1, TE2) des Dichtungskörpers (DK-Z) hinwegreichend angeordnet sind, daß in jeder Trennebene (TE1, TE2) eine Abfangvorrichtung, bestehend aus jeweils zwei zusammenwirkenden in Kammern (KK1, KK2, KKM) der jeweiligen Dichtungskörpersegmente (AS1, AS2, MS) geführten Druckplatten (DP1, DP2, DPM1, DPM2) mit korrespondierend eingebrachten Einführungsöffnungen (E) angeordnet ist, daß äußere, nach einwärts wirkende Druckmittel (DM) für die jeweils außen liegenden Druckplatten (DP1, DP2) an den Verbindungselementen (VEA1, VEA2) angeordnet sind und daß innere, nach auswärts wirkende Druckmittel (K) für die in den jeweiligen Mittelsegmenten (MS) des Dichtungskörpers (DK-Z) geführten inneren Druckplatten (DPM1, DPM2) angeordnet sind.

2. Dichtungskörper nach Anspruch 1, **dadurch gekennzeichnet,** daß die in Außensegmenten (AS1, AS2) liegenden Druckplatten (DP1, DP2) mittels Druckbügel (DM) einwärts eintreibbar sind.

3. Dichtungskörper nach einem der vorhergehenden Ansprüche, **dadurch gekennzeichnet,** daß die in den Mittelsegmenten (MS) liegenden Druckplatten (DPM1, DPM2) mittels mindestens einem Spreizkeil (K) nach auswärts preßbar sind.

4. Dichtungskörper nach einem der vorhergehenden Ansprüche, **dadurch gekennzeichnet,** daß eine Führung im Mittelsegment (MS) für jeden Spreizkeil (K) angeordnet ist.

5. Dichtungskörper nach Anspruch 4, **dadurch gekennzeichnet,** daß die Führung in Form einer quer verlaufenden Führungsrippe (FR) angeordnet ist und daß jeder Spreizkeil (K) ein korrespondierendes Führungselement aufweist.

6. Dichtungskörper nach Anspruch 5, **dadurch gekennzeichnet,** daß eine Führungsnut im Spreizkeil (K) angeordnet ist.

7. Dichtungskörper nach Anspruch 5, **dadurch gekennzeichnet,** daß der Spreizkeil (K) U-förmig ausgebildet ist und daß die Führungsrippe (FR) zwischen den U-Schenkeln (KS) geführt ist.

8. Dichtungskörper nach einem der vorhergehenden Ansprüche, **dadurch gekennzeichnet,** daß die Führungselemente (FR) für die Spreizkeile (K) schräg zur jeweiligen Trennebene angeordnet sind.

9. Dichtungskörper nach einem der vorhergehenden Ansprüche, **dadurch gekennzeichnet,** daß die versteifenden Verbindungselemente (VEA1, VEA2, VEM) für den Dichtungskörper Segmente (AS1, AS2, MS) aus Hülsen gebildet sind, die in den einzelnen Dichtungskörpersegmente (AS1, AS2, MS) angeordnet sind und daß innerhalb dieser Hülsen Schrauben (S) über die Teilungsebene (TE1, TE2) hinwegreichend geführt sind.

10. Dichtungskörper nach Anspruch 9, **dadurch gekennzeichnet,** daß die Hülsen in den äußeren Dichtungskörpersegmenten (AS1, AS2) mit den Druckbügeln (BM) eine Baueinheit bilden.

11. Dichtungskörper nach einem der vorhergehenden Ansprüche, **dadurch gekennzeichnet,** daß die Druckplatten (DPM1, DPM2) in den Mittelsegmenten (MS) des Dichtungskörpers (DK-Z) entlang ihrer dem Spreizkeil (K) zugewandten Kanten eine dem Keilwinkel entsprechende Anschrägung aufweisen.

12. Dichtungskörper nach einem der vorhergehenden Ansprüche, **dadurch gekennzeichnet,** daß die Kammern (KK1, KK2, KKM) für die Druckplatten (DP1, DP2, DPM1, DPM2) im Dichtungskörperansatzteil (DK-A) quer zur Einführungsrichtung und gegebenenfalls parallel zu den Dichtungslamellen (DL) des Dichtungskörpers (DK-Z) angeordnet sind.

13. Dichtungskörper nach einem der vorhergehenden Ansprüche, **dadurch gekennzeichnet,** daß eine Abstandsfixierung für die Druckplatten (DP1, DP2, DPM1, DPM2) während des Ausschneidens der Einführungsöffnungen (E) angeordnet ist, wobei der Abstand (a) zwischen den Druckkanten eines Druckplattenpaares (DP1-DPM1, DP2-DPM2) vorzugsweise der Dicke des einzulegenden plastischen Dichtungsmaterials entspricht.

14. Dichtungskörper nach einem der vorhergehednen Ansprüche, **dadurch gekennzeichnet,** daß der Spreizkeil (K) und das korrespondierende Führungselement (FR) zusammenwirkende Rastelemente, insbesondere Zähne (ZK-KS, Z-FR), aufweisen.

## Claims

1. Sealing body for longitudinally split cable fittings consisting of thermoplastic synthetic material, having adaptable cable entry openings (E), which can be cut in if required, in the separating plane of the sealing body (DK-Z), and having an integrated trapping device for the inserted cables, characterized in that the sealing body (DK-Z) is divided into more than two sealing body segments (AS1, AS2, MS) in the transverse direction, in that the cable entry openings (E) can be cut in in each separating plane (TE1, TE2), in that reinforcing connecting elements (VEA1, VEA2, VEM) are arranged extending away over the separating planes (TE1, TE2) of the sealing body (DK-Z), in that a trapping device, in each case comprising two interacting pressure plates (DP1, DP2, DPM1, DPM2) which are guided in chambers (KK1, KK2, KKM) in the respective sealing body segments (AS1, AS2, MS) and having correspondingly fitted entry openings (E), is arranged in each separating plane (TE1, TE2), in that outer pressure means (DM), which act inwards, are arranged on the connecting elements (VEA1, VEA2) for the pressure plates (DP1, DP2) which are in each case located on the outside, and in that inner pressure means (K), which act outwards, are arranged for the inner pressure plates (DPM1, DPM2) which are guided in the respective centre segments (MS) of the sealing body (DK-Z).

2. Sealing body according to Claim 1, characterized in that the pressure plates (DP1, DP2) which are located in outer segments (AS1, AS2) can be driven inwards by means of pressure brackets (DM).

3. Sealing body according to one of the preceding claims, characterized in that the pressure plates (DPM1, DPM2) which are located in the centre segments (MS) can be pressed outwards by means of at least one expanding wedge (K).

4. Sealing body according to one of the preceding claims, characterized in that a guide is arranged in the centre segment (MS) for each expanding wedge (K).

5. Sealing body according to Claim 4, characterized in that the guide is arranged in the form of a guide rib (FR) which runs transversely, and in that each expanding wedge (K) has a corresponding guide element.

6. Sealing body according to Claim 5, characterized in that a guide groove is arranged in the expanding wedge (K).

7. Sealing body according to Claim 5, characterized in that the expanding wedge (K) is of U-shaped construction, and in that the guide rib (FR) is guided between the U-limbs (KS).

8. Sealing body according to one of the preceding claims, characterized in that the guide elements (FR) for the expanding wedges (K) are arranged inclined with respect to the respective separating plane.

9. Sealing body according to one of the preceding claims, characterized in that the reinforcing connecting elements (VEA1, VEA2, VEM) for the sealing body segments (AS1, AS2, MS) are formed from sleeves which are arranged in the individual sealing body segments (AS1, AS2, MS), and in that screws (S) are guided extending away over the dividing plane (TE1, TE2) within these sleeves.

10. Sealing body according to Claim 9, characterized in that the sleeves form a structural unit with the pressure brackets (BM) in the outer sealing body segments (AS1, AS2).

11. Sealing body according to one of the preceding claims, characterized in that the pressure plates (DPM1, DPM2) have an incline, corresponding to the wedge angle, in the centre segments (MS) of the sealing body (DK-Z) along their edges facing the expanding wedge (K).

12. Sealing body according to one of the preceding claims, characterized in that the chambers (KK1, KK2, KKM) for the pressure plates (DP1, DP2, DPM1, DPM2) in the sealing body attachment part (DK-A) are arranged transversely with respect to the insertion direction and possibly parallel to the sealing laminates (DL) of the sealing body (DK-Z).

13. Sealing body according to one of the preceding claims, characterized in that a separation fixing device is arranged for the pressure plates (DP1, DP2, DPM1, DPM2) while the entry openings (E) are being cut out, the separation (a) between the pressure edges of a pressure plate pair (DP1-DPM1, DP2-DPM2) preferably corresponding to the thickness of the plastic sealing material which is to be inserted.

14. Sealing body according to one of the preceding claims, characterized in that the expanding wedge (K) and the corresponding guide element (FR) have interacting latching elements, preferably teeth (ZK-KS, Z-FR).

## Revendications

1. Corps d'étanchéité pour des garnitures de câble divisées longitudinalement et en matériau plastique, comportant des ouvertures (E) de guidage intérieur du câble pouvant être adaptées et, en cas de besoin, fendues, dans le plan de séparation du corps d'étanchéité (DK-Z), et comportant un dispositif de dérivation intégré pour les câbles introduits, caractérisé en ce que le corps d'étanchéité (DK-z) est séparé dans la direction transversale en plus de deux segments de corps d'étanchéité (AS1, AS2, MS), que les ouvertures de guidage intérieur du câble (E) peuvent être fendues dans chaque plan de séparation (TE1, TE2), que des éléments de liaison de blindage (VEA1, VEA2, VEM) sont disposés en s'étendant au-dessus des plans de séparation (TE1, TE2) du corps d'étanchéité (DK-Z), que, dans chaque plan de séparation (TE1, TE2), est disposé un dispositif de dérivation qui est constitué de deux plaques d'appui (DP1, DP2, DPM1, DPM2) agissant conjointement et guidées dans des chambres (KK1, KK2, KKM) des segments (AS1, AS2, MS) respectifs du corps d'étanchéité, et comportant des ouvertures internes de guidage (E) introduites de manière correspondante, qu'à l'extérieur, sont disposés, au niveau des éléments de liaison (VEA1, VEA2), des moyens d'appui (DM) agissant vers l'intérieur et pour les plaques d'appui (DP1, DP2) présentes à l'extérieur, et qu'à l'intérieur, sont disposés des moyens d'appui (K), agissant vers l'extérieur et pour les plaques d'appui intérieures (DPM1, DPM2) guidées dans les segments respectifs centraux (MS) du corps d'étanchéité (DK-Z).

2. Corps d'étanchéité suivant la revendication 1, caractérisé en ce que les plaques d'appui (DP1, DP2), présentes dans les segments extérieurs (AS1, AS2), peuvent être enfoncées vers l'intérieur au moyen d'étriers de serrage (DM).

3. Corps d'étanchéité suivant l'une des revendications précédentes, caractérisé en ce que les plaques d'appui (DPM1, DPM2), présentes dans les segments centraux (MS), peuvent être pressées vers l'extérieur au moyen d'au moins une clavette d'écartement (K).

4. Corps d'étanchéité suivant l'une des revendications précédentes, caractérisé en ce qu'un guidage est disposé dans le segment central (MS) pour chaque clavette d'écartement (K).

5. Corps d'étanchéité suivant la revendication 4, caractérisé en ce que le guidage est disposé sous la forme d'une nervure de guidage (FR) s'étendant transversalement et que chaque clavette d'écartement (K) comporte un élément de guidage correspondant.

6. Corps d'étanchéité suivant la revendication 5, caractérisé en ce qu'une gorge de guidage est disposée dans la clavette d'écartement (K).

7. Corps d'étanchéité suivant la revendication 5, caractérisé en ce que la clavette d'écartement (K) est en forme de U et que la nervure de guidage (FR) est guidée entre les bords latéraux (KS) du U.

8. Corps d'étanchéité suivant l'une des revendications précédentes, caractérisé en ce que les éléments de guidage (FR) pour les clavettes d'écartement (K) sont disposés de manière inclinée par rapport au plan respectif de séparation.

9. Corps d'étanchéité suivant l'une des revendications précédentes, caractérisé en ce que les éléments de liaison de blindage (VEA1, VEA2, VEM) pour les segments (AS1, AS2, MS) du corps d'étanchéité sont formés à partir de douilles qui sont disposées dans chacun des segments du corps d'étanchéité (AS1, AS2, MS) et qu'à l'intérieur de ces douilles sont guidées des vis (S) s'étendant à travers les plans de séparation (TE1, TE2).

10. Corps d'étanchéité suivant la revendication 9, caractérisé en ce que les douilles forment, dans les segments extérieurs (AS1, AS2) du corps d'étanchéité, une unité avec les étriers de serrage (BM).

11. Corps d'étanchéité suivant l'une des revendications précédentes, caractérisé en ce que les plaques d'appui (DPM1, DPM2) comportent, dans les segments centraux (MS) du corps d'étanchéité (DK-Z), le long de leur bord tourné vers la clavette d'écartement (K), une inclinaison correspondant à l'angle de la clavette.

12. Corps d'étanchéité suivant l'une des revendications précédentes, caractérisé en ce que les chambres (KK1, KK2, KKM) pour les plaques d'appui (DP1, DP2, DPM1, DPM2) sont disposées dans la partie saillante (DK-A) du corps d'étanchéité transversalement à la direction de guidage intérieur et également parallèlement aux lamelles d'étanchéité (DL) du corps d'étanchéité (DK-Z).

13. Corps d'étanchéité suivant l'une des revendications précédentes, caractérisé en ce qu'une fixation de distance pour les plaques d'appui (DP1, DP2, DPM1, DPM2) est montée pendant la découpe des ouvertures de guidage intérieur (E), la distance (a) entre les bords d'appui d'un couple de plaques d'appui (DP1-DPM1, DP2-DPM2) correspondant, de préférence, à l'épaisseur du matériau d'étanchéité plastique à déposer.

14. Corps d'étanchéité suivant l'une des revendications précédentes, caractérisé en ce que la clavette d'écartement (K) et l'élément de guidage correspondant (FR) comportent des éléments d'arrêt agissant conjointement, notamment des dents (ZK-KS, Z-FR).
